Europäisches Patentamt

European Patent Office

Office européen des brevets

⑨

Publication number: **0 298 366**

**A1**

(12) **EUROPEAN PATENT APPLICATION**

(21) Application number: **88110457.4**

(22) Date of filing: **30.06.88**

(51) Int. Cl.⁴: **H01M 10/14 , H01M 10/28**

(30) Priority: **08.07.87 IT 4162987**

(43) Date of publication of application:
**11.01.89 Bulletin 89/02**

(84) Designated Contracting States:
**DE FR GB IT**

(71) Applicant: **Lorenzin, Ivano**
**Via Sette Martiri, 142**
**I-35100 Padova(IT)**

(72) Inventor: **Lorenzin, Ivano**
**Via Sette Martiri, 142**
**I-35100 Padova(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) Machine for assembling units composed of plates and separators, particularly for forming electric accumulators.

㊗ The machine is suitable for the assembly of units composed of positive lead plates and separators for forming electric accumulators. The machine comprises a plurality of plate loading sectors (2) with inclinded planes, one or more separator feeding supports (9, 10) with inclined planes, vertically slideable and arranged laterally of said loading sectors (2), and one or more devices (18, 20, 21) adapted to extract the separators from the feeding supports (9, 10) and to transfer and deposit them onto the loading sectors (2). A plurality of raisable and lowerable inclined planes defined by rollers is arranged rearwardly of the loading sectors (2) and defines continuation thereof. Means are provided for causing the sliding of plates from the loading sectors (2) to the roller planes and for the sliding of assembled units on the roller planes and onto conveyor elements.

Fig. 1

# MACHINE FOR ASSEMBLING UNITS COMPOSED OF PLATES AND SEPARATORS, PARTICULARLY FOR FORMING ELECTRIC ACCUMULATORS

The present invention relates to a machine for assembling units composed of plates and separators particularly for forming electric accumulators.

At present, such units are composed of negative and positive plates between which separators, in plastic material or in other material, are interposed.

After assembly, the units are transferred to a soldering machine to be welded or soldered together and assembled.

The dimensions of accumulators are extremely variable according to the use to which they are assigned, and accordingly, the plates and the separators contained therein may also in turn have extremely variable dimensions.

All this entails great difficulties in the construction of automatic or semi-automatic machines capable of assembling such units, since such machines must be characterized by a high degree of versatility and easy adjustment.

A very small number of machines for the assembly of units having more or less fixed dimensions is therefore currently in use.

Such machines, however, besides requiring constant assistance to effect machine feed, often damage the plates, which, as known, are constituted by fragile, delicate material.

In most cases one still resorts, for the assembly of the units, to manual forming, which has a limited yield and furthermore entails other disadvantages, such as e.g. the possibility of human error, as well as the possibility of damage to the plates being handled.

The aim of the present invention is to eliminate the above described disadvantages by providing a semi-automatic machine which is capable of assembling units using plates and separators with widely varying dimensions with rapid and simple adjustment and with no possibility of error.

Within the scope of the above described aim, an important object is to provide a machine for assembling units wherein no friction, suction, grip action which deteriorate the plates, and additional adjustments occur during its operation.

Another important object is to provide a machine which allows the assembly and the self-alignment even of units formed by not perfectly planar plates.

Another object is to provide a machine for assembling units which has an ability to accumulate raw material capable of allowing long autonomy in operation.

Still another object is to provide a machine for assembling units which is capable of feeding one or more machines for soldering or welding said units.

Not least object is to provide a machine for assembling units which can be produced at low cost with plant and equipment currently used in the field.

This aim, as well as these and other objects which will become apparent hereinafter, are achieved by a machine for assembling units composed of plates and separators particularly for forming electric accumulators, characterized in that it comprises a plurality of plate loading sectors having inclined loading planes, at least one substantially vertically slideable separator feed support having inclined feed planes and being arranged adjacent to said loading sectors, at least one device adapted for extracting said separators from said at least one feed support and for transferring and depositing said separators on said loading sectors, a plurality of movable rear inclined planes arranged rearwardly of said loading sectors and means for transferring said plates, with said separators superimposed thereon, from said loading sectors to said rear inclined planes for transferring already-formed complete units, from said rear planes onto transfer elements, said stop means being adapted for abutment with said units being formed on said rear inclined planes.

Further characteristics and advantages of the invention will become apparent from the detailed description of a preferred but not exclusive embodiment thereof, illustrated only by way of non-limitative example in the accompanying drawings, wherein:

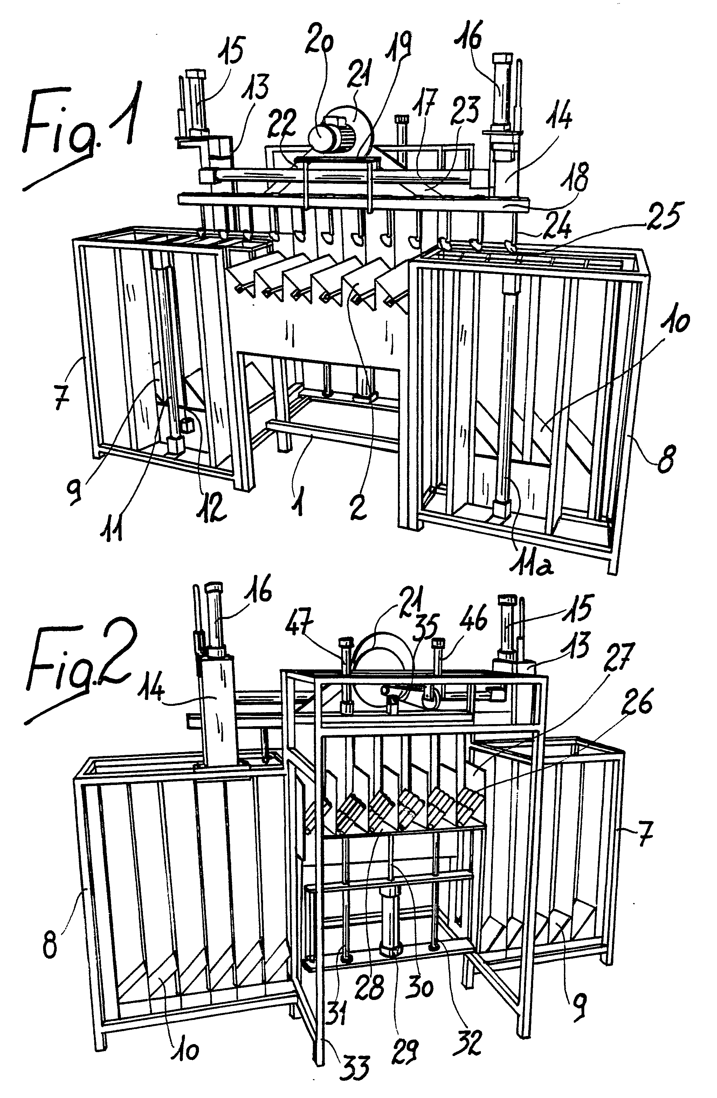

figure 1 is a front perspective view of the machine according to the invention;

figure 2 is a rear perspective view of the machine of figure 1;

figure 3 is an enlarged perspective detail view of the front part of the machine;

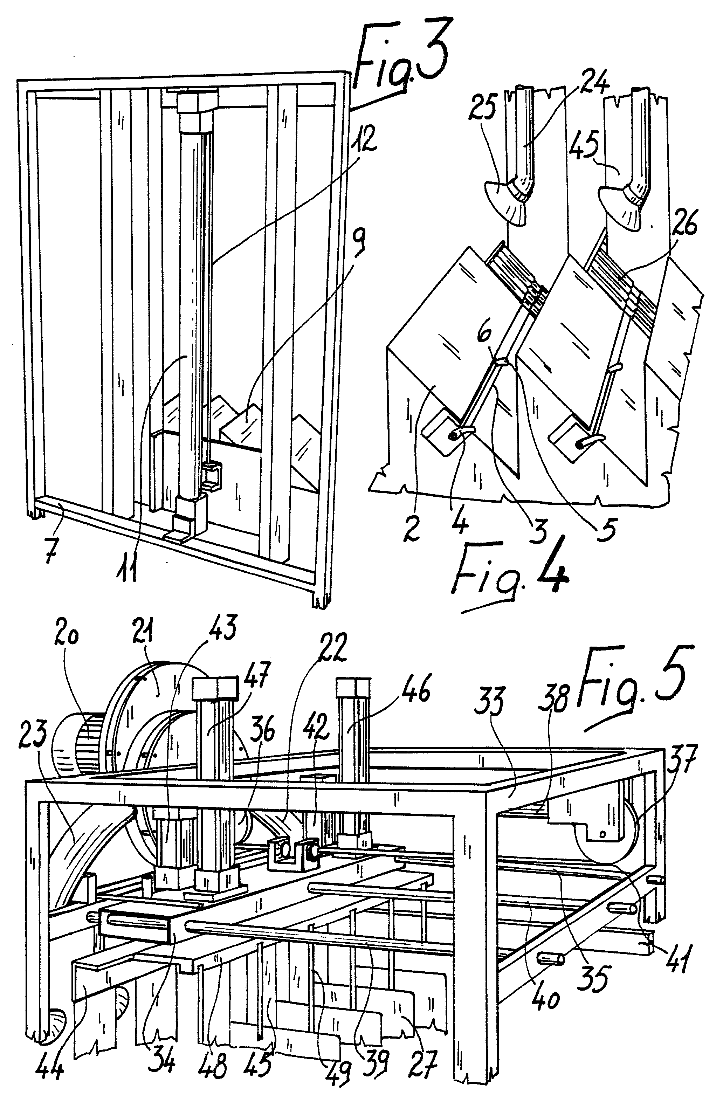

figure 4 is a lateral perspective detail view of the front part of the machine;

figure 5 is a perspective detail view of the top rear part of the machine;

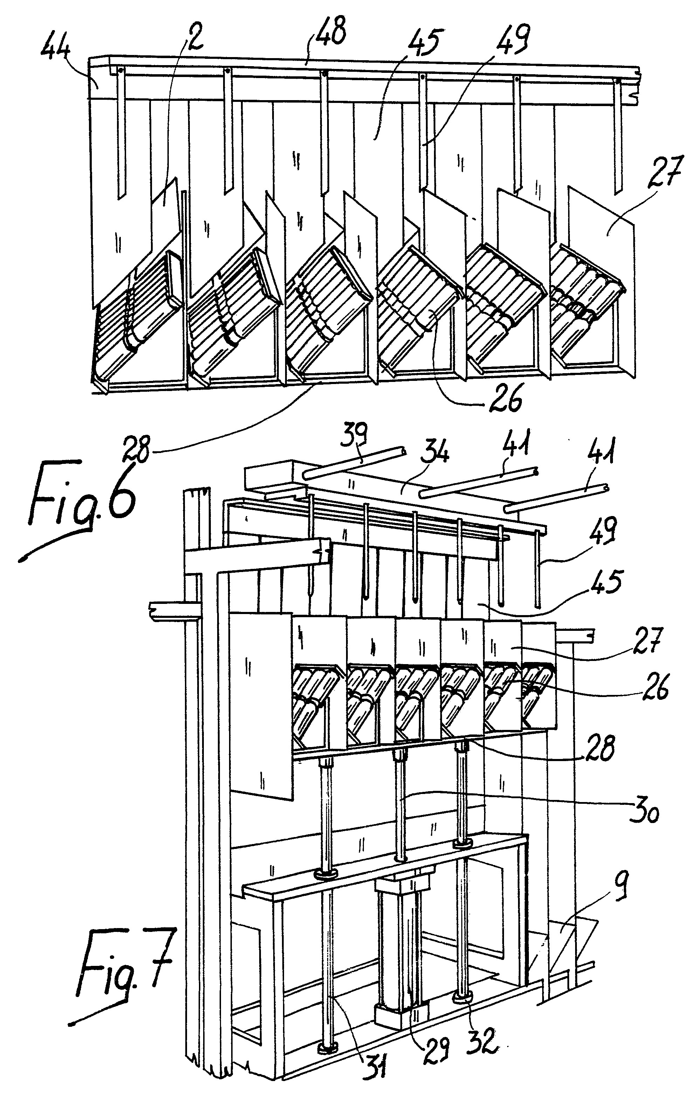

figure 6 is a perspective detail view of the central rear part of the machine;

figure 7 is a perspective detail view of the lower rear part of the machine.

With reference to the above described figures, the machine for assembling units composed of plates and separators particularly for forming electric accumulators comprises, in its present embodiment, a first frame 1 which supports a plurality of leading sectors 2 composed of inclined planes.

advantageously made of sheet metal. which are parallel and equally spaced with respect to one another and arranged transversely.

Said loading sectors 2 are each longitudinally traversed by a groove 3 from which two spaced teeth, respectively 4 and 5, can protrude; said teeth are rigidly associated radially with a small shaft 6 arranged below each sector.

According to the invention the shafts 6 are driven in synchronous half-rotation and axial translatory motion by means such as pneumatic and/or hydraulic cylinders, and mechanical connections, not shown in the drawing figures for clarification purposes.

This movement is controlled by two proximity sensors arranged at the ends of the loading sectors 2.

Two second parallelepipedal frames advantageously made of tubular and planar elements, respectively indicated at 7 and 8, are provided at opposite longitudinal sides of the loading sectors 2. A support for feeding separators, having inclined planes respectively indicated by the reference numerals 9 and 10, is vertically slideable along guides inside each of said second frames.

This vertical sliding movement is obtained by means of two first oil-dynamic cylinders 11 and 11a arranged inside the frames 7 and 8, expediently provided with pulleys, and with tension elements, not shown in the drawing figures for clarification purposes, rigidly coupled at their ends with said feed supports.

Plates 13 and 14 are upwardly associated with said frames 7 and 8, e.g. by bolting, and respectively support two first substantially vertical pneumatic cylinders 15 and 16; an electromagnetic cylinder 17 is downwardly rigidly coupled between the protruding stems of said first cylinders 15, 16. A tubular element 18, closed at its ends, being arranged parallel to and below said electromagnetic cylinder 17, and an upper planar base 19, adapted for supporting a power source such as an electric motor 20 axially connected to the blades of a centrifugal vacuum pump 21, are slideably associated with said electromagnetic cylinder.

The intake of said pump 21 is connected, by means of two divergent tubes respectively indicated by the reference numerals 22 and 23, to the inside of said tubular element 18 from which a plurality of cylindrical tubes 24 downwardly protrudes, which are provided, at their ends, with suckers 25 in rubber-like material.

In the rear part of the machine, as a continuation of said loading sectors 2, there is a plurality of inclined planes 26, each provided with a plurality of rollers and being separated from one another by vertical laminar sectors 27 and collectively supported by a vertically slideable base 28.

Vertical sliding movement of said base 28 is achieved by means of a third downwardly arranged hydraulic or oil-dynamic cylinder 29 having a stem 30 coupled to the base 28 by means of two guiding rods 31 and 32 arranged laterally with respect to said cylinder.

A third advantageously tubular frame 33, essentially parallelepipedal in shape, is arranged at the rear part of the machine and internally supports, in a transverse position, a tubular element 34 having an essentially rectangular cross section and being slideable transversely to its longitudinal axis on a horizontal plane between a position above said inclined planes 26 and a position above an accumulation means preferably comprising, for instance, a trolley or the end plane of a conveyor belt, not shown in the drawing figures for clarification purposes.

The movement of said tubular element 34 is obtained by coupling thereto the ends of a tension element 35 extending between two pulleys, respectively 36 and 37, rotoidally linked to the ends of a fourth hydraulic or oil-dynamic cylinder 38, which causes sliding movement of said tension element by means of the movement of its inner piston.

Said tubular element 34, during sliding, is rigidly and transversely linked to guides, respectively 39, 40 and 41, rigidly coupled to the frame.

Above said tubular element 34 there is a pair of second pneumatic cylinders, respectively indicated by the reference numerals 42 and 43, which raise and lower a longitudinal L-shaped profiled element 44, arranged downwardly and having coupled thereto substantially vertical plates 45, each terminating at the rollers of one of the inclined planes 26.

A pair of third pneumatic cylinders, respectively indicated at 46 and 47, is arranged above said tubular element 34 and is adapted to lower and raise a lower plate 48, rigidly associated with vertical bars 49, arranged parallel to said plates 45 and adjacent to the end of said rollers of said planes 26.

Dust collection bases, connected to individual aspirators or to a general aspirating network, may be provided.

The operation of the machine is as follows:
a series of plates, taken from pallets previously placed proximate to the machine, is loaded onto the front ends of the loading sectors 2, one plate for each sector. Such loading operation may obviously be effected either manually or automated.

Meanwhile, a series of rows of separators, with their ridges in the required direction, has already been positioned on the feeding supports 9 and 10.

After first loading of the plates onto the loading sectors 2, the automatic translatory motion of said plates towards the rear part of the loading sectors 2 is controlled by means of the two proximity sensors located at the lateral ends of said loading sectors, so that said plates are aligned with the separators located on the feeding supports 9 and 10.

This translatory motion is then effected by means of the teeth 4 and 5 which are caused to protrude from the grooves 3 provided on the loading sectors 2 and then caused to move.

Naturally, after the translatory motion of the plates, the front part of the loading sectors 2 is ready for a new loading operation.

At this point the tubular element 18, guided or driven by the electromagnetic cylinder 17, is already positioned so that the suckers 25 are arranged at each row of separators accumulated above one of the two feeding supports 9 or 10.

The tubular element 18 is then caused to lower by means of the two first pneumatic cylinders 15 and 16 until the suckers 25 each make contact with one of the separators.

The gripping of these separators is obtained in negative pressure by means of the vacuum pump 21 which sucks air from the inside of the tubes 24 and the tubular element 18.

Subsequently, the initially vertical and successively horizontal translatory motion of the tubular element 18 is performed, followed by the deposition of the series of separators above the plates and, due to the length of said element 18, by the positioning of the suckers 25 above the separators of the feed support opposite to the support from which the preceding extraction occurred.

The feed supports 9 and 10 are automatically and independently controlled so that the upper level of the separators is constant.

Once the supports have been completely emptied, said supports are again lowered to allow a new storage, the capacity whereof is expediently intended to afford extended automatic assembly capacity of the machine (e.g. approximately 45-60 minutes).

The subsequent operation is the translatory motion of the plates with separator from the rear part of the loading sectors 2 to the pluralities of rollers associated with the series of planes 26 by means of the teeth 4 and 5 which are caused to again protrude from the slots 3 and to move.

The planes 26 are supported by the base 28 which, after every loading of the plates with separators, is caused to descend by means of the third oil-dynamic cylinder 29 so as to keep the upper edge at a constant level, thus allowing the plate-separator pairs arriving from the loading sectors 2 to be deposited gently, the plates being always placed on top of the already deposited separators.

During the abovementioned translatory motion of the plate-separator pairs, the plates 45 are kept in a raised position by the second pneumatic cylinders 42 and 43 while the bars 49 are maintained in a lowered position by the third pneumatic cylinders 46 and 47 so that they constitute stop elements for said translatory motion; this is the only adjustment required by the machine.

An appropriate counter may be provided to indicate the end of the composition desired for the units, permitting raising of the base 28 and a successive translatory motion of the completed units onto a conveyor belt, trolley, etc.

This final translatory motion is achieved by the plates 45, which are lowered by the second pneumatic cylinders 42 and 43 and then translate with the movement of the tubular element 34 actuated by the oil-dynamic cylinder 38.

By recycling multiple trolleys it is possible to perform the supply of the assembled units to at least one soldering or welding machine; production will be interrupted only for the time required for the taking and return of the trolleys or for the movement of the conveyor belt.

All the movements of the machine occur in automatic sequence with respect to one another, and may possibly be controlled by a microprocessor or by a computer.

From the above description it is apparent that the invention fully achieves the intended aim and objects, since no friction, suction and gripping actions which deteriorate the plates occur during the operation of the assembling machine according to the invention.

A determining characteristic of the machine is the inclined-plane configuration of the loading, transfer, forming and accumulation sectors.

This characteristic allows the self-alignment of the plates, even if not planar or with different dimensions and configurations, with a single adjustment.

The same self-alignment is obtained for the loading, extraction and deposition of the separators.

The machine is furthermore provided with a considerably greater accumulation ability than machines currently in use which allows greater autonomy in operation.

The invention thus conceived is susceptible to numerous modifications and variations, all of which are within the scope of the inventive concept.

Furthermore all the details may be replaced with other technically equivalent elements.

In practice, the materials employed, as well as the dimensions, may be any according to the requirements.

## Claims

1. Machine for assembling units composed of plates and separators particularly for forming electric accumulators, characterized in that it comprises a plurality of plate loading sectors having inclined loading planes, at least one substantially vertically slideable separator feed support having inclined feed planes and being arranged adjacent to said loading sectors, at least one device adapted for extracting said separators from said at least one feed support and for transferring and depositing said separators on said loading sectors, a plurality of movable rear inclined planes arranged rearwardly of said loading sectors and means for transferring said plates, with said separators superimposed thereon, from said loading sectors to said rear inclined planes for transferring already-formed complete units, from said rear planes onto transfer elements, said stop means being adapted for abutment with said units being formed on said rear inclined planes.

2. Machine according to claim 1, characterized in that said loading sectors are parallel, equally spaced from one another and arranged transversely.

3. Machine according to claim 1, characterized in that said separator feed supports are coupled to oil-dynamic cylinders which allow their vertical sliding.

4. Machine according to claim 1, characterized in that said separator extraction devices comprise tubular element, raisable, lowerable and axially movable by means of cylinders, and being arranged above said loading sectors and said feeding supports, a plurality of tubes provided at their ends with suckers protruding downwardly from said tubular element, a vacuum pump, adapted for sucking air from the inside of said tubular element and said small cylindrical tubes.

5. Machine according to claim 1, characterized in that said inclined planes are separated from one another by laminar sectors and are collectively supported by a base coupled to an oil-dynamic cylinder associated with said base.

6. Machine according to one or more of the preceding claims, characterized in that said means for sliding said plates from said loading sectors to said planes comprise a series of small shafts, each positioned parallel and below each loading sector at a groove formed in said sector, said shafts having spaced protruding teeth, and being imparted with synchronous half-rotation and axial translatory motion.

7. Machine according to one or more of the preceding claims, characterized in that said means for the transfer of already-formed complete units from said planes onto transport elements comprise vertical plates arranged at each of said inclined planes, said plates being upwardly coupled to an L-shaped horizontal profiled element, raisable and lowerable by means of pneumatic cylinders, said profiled element being upwardly coupled to an element slideable transversely to its longitudinal axis on a horizontal plane between a position above said inclined planes and a position above an accumulation, the translatory motion being obtained by means of an oil-dynamic cylinder.

8. Machine according to one or more the preceding claims, characterized in that said abutment means comprise bars arranged parallel to said plates for the transfer of complete units, said bars being raisable and lowerable by means of pneumatic cylinders and rigidly coupled to a plate downwardly coupled to said element.

9. Machine for assembling units composed of plates and separators, particularly for forming electric accumulators, characterized in that it comprises plate loading means, separator feed means arranged adjacent to said plate loading means, at least one device adapted for extracting separators from said separator feed means and transferring extracted separators onto said plate loading means, transport means, and means for transferring assembled units from said plate loading means to said transport means.

Fig.1

Fig.2

Fig.3

Fig.4

Fig.5

Fig.6

Fig.7

| DOCUMENTS CONSIDERED TO BE RELEVANT | | | EP 88110457.4 |
|---|---|---|---|
| Category | Citation of document with indication, where appropriate, of relevant passages | Relevant to claim | CLASSIFICATION OF THE APPLICATION (Int. Cl.4) |
| A | US - A - 3 443 706 (PUHM)<br>* Fig. 1; claim 1 *<br>-- | 1 | H 01 M 10/14<br>H 01 M 10/28 |
| A | US - A - 3 052 968 (KERNS)<br>* Fig. 2; claim 1 *<br>-- | 1 | |
| A | GB - A - 1 200 182 (LUCAS)<br>* Fig. 1; claim 1 *<br>---- | 1 | |
| | | | **TECHNICAL FIELDS SEARCHED (Int. Cl.4)**<br><br>H 01 M |

The present search report has been drawn up for all claims

| Place of search | Date of completion of the search | Examiner |
|---|---|---|
| VIENNA | 14-10-1988 | LUX |